# EUROPÄISCHE PATENTSCHRIFT

(11) **EP 2 659 105 B1**
(45) Veröffentlichungstag und Bekanntmachung des Hinweises auf die Patenterteilung: **27.04.2016**
(21) Anmeldenummer: 11797261.2
(22) Anmeldetag: 20.12.2011
(51) Int. Cl.: F02B 37/18

(54) **ABGASTURBOLADER MIT EINEM TURBINENGEHÄUSE MIT INTEGRIERTEM WASTEGATE-STELLER**
EXHAUST-GAS TURBOCHARGER HAVING A TURBINE HOUSING WITH AN INTEGRATED WASTEGATE ACTUATOR
TURBOCOMPRESSEUR À GAZ D'ÉCHAPPEMENT COMPORTANT UN CARTER DE TURBINE MUNI D'UN ACTIONNEUR DE SOUPAPE DE DÉCHARGE INTÉGRÉ

(30) Priorität: 28.12.2010 DE 102010064226
(43) Veröffentlichungstag der Anmeldung: 06.11.2013
(73) Patentinhaber: Continental Automotive GmbH, 30165 Hannover (DE)
(72) Erfinder: BOGNER, Mathias, 93083 Obertraubling (DE); BÖNING, Ralf, 67829 Reiffelbach (DE); KÖMPEL, Ralph-Maurice, 68159 Mannheim (DE); HILLER, Marc, 67294 Morschheim (DE); HERFURTH, Roland, 93051 Regensburg (DE)
(86) Internationale Anmeldenummer: PCT/EP2011/073409
(87) Internationale Veröffentlichungsnummer: WO 2012/089560

(56) Entgegenhaltungen:
- EP-A2- 1 881 162
- WO-A2-2010/009945
- WO-A2-2011/087939
- DE-A1-102007 017 825
- DE-A1-102008 014 609
- JP-A- 2007 262 964
- US-A- 4 075 849
- US-A1- 2008 298 953
- US-A1- 2010 024 414

## Beschreibung

Die Erfindung betrifft einen Abgasturbolader, der mit einem sogenannten Wastegate ausgestattet ist.

Abgasturbolader dienen dazu, den Wirkungsgrad eines Verbrennungsmotors zu verbessern und damit dessen Leistung zu steigern. Der Abgasturbolader weist hierzu eine Turbine mit einem Turbinenrad und einen Verdichter mit einem Verdichterrad auf, wobei die beiden Laufräder auf einer gemeinsamen Welle angeordnet sind. Das Turbinenrad wird hierbei über einen Abgasmassenstrom einer angeschlossenen Brennkraftmaschine angetrieben und treibt wiederum das Verdichterrad an. Der Verdichter verdichtet angesaugte Frischluft und führt diese der Brennkraftmaschine zu. Die gemeinsame Welle ist in einem Lagergehäuse des Turboladers gelagert. Des Weiteren ist das Turbinenrad der Turbine in einem Turbinengehäuse angeordnet und das Verdichterrad des Verdichters in einem Verdichtergehäuse.

Ein solcher Abgasturbolader hat im Betrieb an der Brennkraftmaschine bzw. einem angeschlossenen Motor verschiedenste Anforderungen zu erfüllen. Eine dieser Anforderungen besteht darin, die hohen Temperaturen aufzunehmen, die beispielsweise aufgrund des heißen Abgasmassenstroms in dem Turboladergehäuse entstehen können.

Die übliche Konstruktion eines Abgasturboladers sieht dabei einzelne Gehäuse vor, die jeweils aus einem an die dort herrschende Temperatur angepassten Werkstoff bestehen. Dabei ist das Verdichtergehäuse üblicherweise aus Aluminium, während das Lagergehäuse aus Grauguss ist, wobei das Lagergehäuse zusätzlich auch wassergekühlt ausgeführt sein kann. Das Turbinengehäuse besteht im Allgemeinen aufgrund der hohen Temperaturen, die in diesem Bereich herrschen, aus Werkstoffen mit einem hohen Nickelanteil. Aufgrund der angepassten, unterschiedlichen Werkstoffe für die einzelnen Gehäuse sind diese Gehäuse als separate Teile ausgebildet, die miteinander verbunden sind und dabei außerdem gegeneinander abgedichtet sein müssen.

Je mehr die Motordrehzahl steigt, desto schneller dreht sich durch die antreibende Abgasmenge das Turbinenrad der Turbine und mit diesem auch die Welle des Abgasturboladers, auf welcher sich weiterhin das Verdichterrad des Verdichters befindet. Durch die schnellere Drehung der Welle und damit auch des Verdichterrades erhöht sich die Luftfördermenge des Verdichters. Dies führt zu einer wachsenden Abgasmenge des Motors und damit wiederum zu einem schnelleren Antreiben des Turbinenrades. Um die jeweils gegebenen mechanischen und thermischen Grenzen des Motors nicht zu überschreiten, ist eine Regelung des Abgasturboladers notwendig.

Eine derartige Regelung eines Abgasturboladers kann unter Verwendung eines Wastegates erfolgen, das auch als Bypassventil bezeichnet wird. Ein derartiges Wastegate weist eine mit dem Turbinengehäuse des Abgasturboladers verbundene Klappe auf, die bei Bedarf geöffnet werden kann, um in Abhängigkeit von der Öffnungsstellung der Klappe einen mehr oder weniger großen Teil des heißen Abgases an der Turbine vorbei direkt in den Auspuff des Fahrzeugs zu leiten. Dadurch wird ein weiteres Ansteigen der Turbinendrehzahl unterbunden.

Ein derartiges Wastegate unterliegt aufgrund seiner Position im heißen Abgasstrom einer hohen thermischen und mechanischen Belastung.

Es ist bereits bekannt, Wastegate-Klappen unter Verwendung eines pneumatischen Aktuators zu verstellen. Derartige pneumatische Aktuatoren werden oftmals auch als Druckdosen bezeichnet.

Bei neueren Anwendungen gibt es nun vermehrt Bestrebungen, die genannten pneumatischen Aktuatoren durch elektrische Aktuatoren zu ersetzen. Ein derartiger elektrischer Wastegate-Steller bietet im Vergleich zu einem pneumatischen Wastegate-Steller Vorteile. Dazu gehören eine hohe Stellgeschwindigkeit, eine gute Stellgenauigkeit und große Stellkräfte. Aufgrund dieser großen Stellkräfte wird ein festes Schließen der Wastegate-Klappe im zugehörigen Klappensitz gewährleistet. Ein elektrischer Wastegate-Steller weist aber auch Nachteile auf. Dazu gehören ein erhöhtes Gewicht, ein vergrößerter Bauraumbedarf und eine Eigenerwärmung. Insbesondere die thermische Auslegung eines elektrischen Wastegate-Stellers bereitet in der Praxis Probleme. Im Motorraum eines Kraftfahrzeugs herrschen Temperaturen von bis zu 140° C. Im unmittelbaren Umfeld eines Abgasturboladers können noch weit höhere Temperaturen auftreten. Im Betrieb eines elektrischen Wastegate-Stellers wird dieser durch den hindurchfließenden Strom zusätzlich erwärmt. Ein weiteres in der Praxis auftretendes Problem ist die Positionierung des jeweiligen Wastegate-Stellers.

In der Regel bildet das Wastegate einen Teil des Turbinengehäuses. Der Wastegate-Steller bzw. Aktuator ist hingegen in der Regel am Verdichtergehäuse oder an einem Halter am Verdichtergehäuse befestigt. Zwischen dem Turbinengehäuse und dem Verdichtergehäuse ist das Lagergehäuse angeordnet. Folglich sind bei bekannten Abgasturboladern der Wastegate-Steller und das Wastegate selbst durch eine vergleichsweise lange Toleranzkette miteinander verbunden.

Ein elektrischer Wastegate-Steller muss in Bezug auf seine Auslegung entsprechend stark gewählt werden, so dass er auch dann die geforderten Stellkräfte aufbringen kann, wenn er selbst sehr heiß ist, und dass er die auftretenden Lastzyklen bewältigen kann, ohne sich zu überhitzen. Des Weiteren müssen beim Zusammenbau in einem letzten Montageschritt durch eine geeignete Ausgleichsvorrichtung im Koppelelement bzw. durch einen geeigneten Montageprozess des Koppelelementes die aufsummierten Toleranzen ausgeglichen werden. Dies ist mit einem erheblichen Aufwand und damit auch mit erheblichen Kosten verbunden. Weiterhin ist aus Dokument US 2008/298953 A1 ein Abgasturbolader bekannt, der ein Turbinengehäuse aufweist und mit einem im Turbinengehäuse angeordneten, eine Wastegate-Klappe aufweisenden Wastegate ausgestattet ist, wobei die Wastegate-Klappe an einer eine Mittelachse aufweisenden Wastegate-Spindel befestigt ist und mittels eines Wastegate-Stellers verstellbar ist, wobei der Wastegate-Steller auch ein elektrischer Wastegate-Steller sein kann. Darüber hinaus ist offenbart, dass der Wastegate-Steller mittels einer separaten Anschlußplatte am Turbinengehäuse mit einem deutlichen Abstand zum Turbinengehäuse montiert ist.

Aus der JP 2007262964 A ist ein Turbolader bekannt, der ein Verdichtergehäuse und ein Turbinengehäuse aufweist. Im Turbinengehäuse ist ein Wastegate vorgesehen, welches von einem elektrischen Wastegate-Steller angesteuert wird. Zu diesem Wastegate-Steller gehört ein in einem Motorgehäuse angeordneter Elektromotor, der eine Abtriebswelle aufweist. Diese ist über eine thermisch von ihr entkoppelte Aktuatorstange mit Mitteln verbunden, die zur Verstellung des Wastegateventils dienen. Das Motorgehäuse des Elektromotors ist unter Verwendung eines Verbindungsrahmens am Verdichtergehäuse befestigt.

Dokument WO 2010 / 009 945 A2 offenbart nun einen weiteren Turbolader mit in dem Verdichtergehäuse integrierten elektrischen oder elektronischen Komponenten, Elektronik, Aktorik und/oder Sensorik, wobei eine Aktorik beispielsweise auch eine Betätigungseinrichtung für ein Wastegate sein kann. Dazu ist das Verdichtergehäuse mit einer Kühlungseinrichtung ausgestattet, die auch den Bereich der integrierten Elektrischen Komponenten mit einschließt.

Die Aufgabe der Erfindung besteht darin, einen Abgasturbolader anzugeben, bei dem die oben beschriebene lange Toleranzkette vermieden wird.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass durch die Integration eines elektrischen Wastegate-Stellers in das Turbinengehäuse eines Abgasturboladers die oben genannte lange Toleranzkette vermieden wird.

Bei bekannten Abgasturboladern war aufgrund der dort herrschenden hohen Temperaturen eine Integration jeglicher Aktuatorik in ein Turbinengehäuse undenkbar. Durch die thermische Entkopplung der Wastegate-Spindel von der Abtriebswelle des Wastegate-Stellers ist der Wastegate-Steller, der vorzugsweise einen Elektromotor aufweist, vor einer Überhitzung geschützt. Des Weiteren ist das Turbinengehäuse wassergekühlt und der Wastegate-Steller ist in vorteilhafter Weise mit einem oder mehreren Kühlkanälen des Turbinengehäuses thermisch gekoppelt, so dass der Kühlungseffekt für den Wastegate-Steller und das Wastegate selbst weiter vergrößert wird. Desweiteren wirkt die Abtriebswelle des elektrischen Wastegate-Stellers bei der Verstellung der Wastegate-Klappe mit der Wastegate-Spindel zusammen, wobei die Abtriebswelle des elektrischen Wastegate-Stellers und die Wastegate-Spindel in einer Flucht liegen und durch eine formschlüssige Verbindung miteinander gekoppelt sind.

Aufgrund der vorstehend beschriebenen Maßnahmen besteht die Möglichkeit, einen elektrischen Wastegate-Steller im Turbinengehäuse anzuordnen, ohne dass es zu einer Überhitzung des Wastegate-Stellers kommt. Zusätzlich zu dieser thermischen Entkopplung ist in vorteilhafter Weise die Wastegate-Spindel mit Kühlrippen versehen.

Weitere vorteilhafte Eigenschaften der Erfindung ergeben sich aus deren nachfolgender beispielhafter Erläuterung anhand der Figuren. Es zeigt
- Figur 1: eine perspektivische Skizze eines Abgasturboladers mit einem wassergekühltem Turbinengehäuse und integriertem Wastegate-Steller,
- Figur 2: eine Skizze des Turbinengehäuses als Baugruppe des in der Figur 1 gezeigten Abgasturboladers,
- Figur 3: eine Skizze des Turbinengehäuses als Baugruppe des in der Figur 1 gezeigten Abgasturboladers ohne Deckel,
- Figur 4: eine Skizze eines bearbeiteten Fertigteils des Turbinengehäuses mit einer Aufnahme für einen elektrischen Wastegate-Steller und
- Figur 5: eine Schnittdarstellung, in welcher die Lagerung einer Wastegate-Spindel in einer Wastegate-Buchse veranschaulicht ist.

Nachfolgend wird ein Abgasturbolader beschrieben, der ein Turbinengehäuse aufweist und mit einem im Turbinengehäuse angeordneten, eine Wastegate-Klappe aufweisenden Wastegate ausgestattet ist, wobei die Wastegate-Klappe mittels einer eine Mittelachse aufweisenden Abtriebswelle eines Wastgate-Stellers verstellbar ist, der Wastegate-Steller integrierter Bestandteil des Turbinengehäuses ist, die Abtriebswelle des Wastegate-Stellers bei der Verstellung der Wastegate-Klappe mit einer einer Mittelachse aufweisenden Wastegate-Spindel zusammenwirkt und die Abtriebswelle des Wastegate-Stellers von der Wastegate-Spindel thermisch entkoppelt ist.

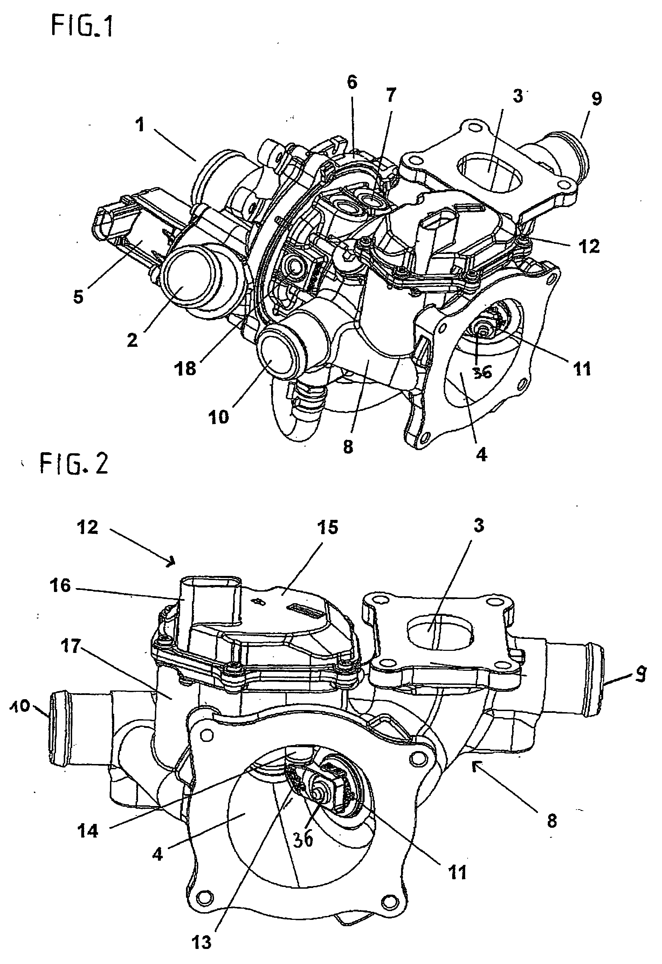

Die Figur 1 zeigt eine perspektivische Skizze zur Veranschaulichung eines Abgasturboladers, der ein wassergekühltes Turbinengehäuse aufweist, in welches ein elektrischer Wastegate-Steller integriert ist. In dieser Darstellung sind die wesentlichen Bauteile und Anschlüsse des Abgasturboladers gezeigt.

Der dargestellte Abgasturbolader weist ein Verdichtergehäuse 6, ein Lagergehäuse 7 und ein wassergekühltes Turbinengehäuse 8 auf.

Im Verdichtergehäuse 6 ist in üblicher Weise ein auf einer gemeinsamen Welle angeordnetes Verdichterrad angeordnet. Im Turbinengehäuse 8 ist in üblicher Weise auf der gemeinsamen Welle ein Turbinenrad angeordnet. Die gemeinsame Welle ist im Lagergehäuse 7, welches zwischen dem Verdichtergehäuse 6 und dem Turbinengehäuse 8 positioniert ist, gelagert. Im Betrieb des Abgasturboladers wird das Turbinenrad über einen Abgasmassenstrom einer angeschlossenen Brennkraftmaschine angetrieben und treibt seinerseits über die gemeinsame Welle das Verdichterrad an. Der Verdichter verdichtet angesaugte Frischluft und führt diese der Brennkraftmaschine zu.

Das Verdichtergehäuse 6 weist einen Frischlufteinlass 1, durch welchen Frischluft aus der Umgebung in den Abgasturbolader eingesaugt wird, und einen Frischluftausgang 2 auf, durch welchen verdichtete Frischluft zur Weiterleitung an die Brennkraftmaschine ausgegeben wird. Des Weiteren ist das Verdichtergehäuse 6 mit einem Schubumluftventil 5 versehen. Dieses Schubumluftventil hat im Betrieb des Abgasturboladers die Aufgabe, im Falle eines negativen Lastsprungs einen Bypass um den Verdichter zu öffnen, so dass überschüssiger Ladedruck abgeblasen werden kann.

Das Lagergehäuse 7 weist einen Öleintritt 18 und einen nicht in der Figur dargestellten Ölaustritt auf. Durch den Öleintritt 18 tritt im Betrieb des Abgasturboladers Öl ein, das zur Schmierung der gemeinsamen Welle verwendet wird.

Das Turbinengehäuse 8 ist mit einem Wassereintritt 9 und einem Wasseraustritt 10 versehen. Im Betrieb des Abgasturboladers tritt durch den Wassereintritt 9 Kühlwasser ein, das durch im Inneren des Turbinengehäuses 8 verlaufende Kühlwasserkanäle geführt wird, und durch den Wasseraustritt 10 das Turbinengehäuse wieder verlässt. Durch dieses Kühlwasser wird das Turbinengehäuse 8, welches im Betrieb des Abgasturboladers aufgrund seiner Positionierung im heißen Abgasstrom hohen Temperaturen ausgesetzt ist, gekühlt.

Des Weiteren ist das Turbinengehäuse 8 mit einem Abgaseintritt 3 und einem Abgasaustritt 4 versehen. Der Abgaseintritt 3 ist mit einem Abgasausgang der Brennkraftmaschine verbunden, so dass durch den Abgaseintritt 3 das heiße Abgas der Brennkraftmaschine in den Innenbereich des Turbinengehäuses 8 gelangt. Dort treibt das heiße Abgas das im Turbinengehäuse angeordnete Turbinenrad an, welches wiederum über die gemeinsame Welle das im Verdichtergehäuse angeordnete Verdichterrad antreibt. Durch den Abgasaustritt 4, der mit dem Katalysator des Kraftfahrzeugs verbunden ist, tritt das Abgas wieder aus dem Turbinengehäuse 8 aus.

Zur Regelung der Leistung des Turbinenrades ist in das Turbinengehäuse 4 ein Wastegate 11 integriert. Dieses weist eine Wastegate-Klappe 36 auf, die mittels eines in das Turbinengehäuse integrierten elektrischen Wastegate-Stellers 12 je nach momentanem Bedarf mehr oder weniger weit geöffnet werden kann, um einen gewünschten Teil des heißen Abgases unter Umgehung des Turbinenrades direkt dem Abgasaustritt 4 zuzuleiten.

Sowohl der genannte elektrische Wastegate-Steller 12 als auch dessen Koppelelement mit der Klappe 36 des Wastegates 11 sind mit den Kühlwasserkanälen des Turbinengehäuses thermisch gekoppelt, so dass auch diese Bauteile durch das Kühlwasser gekühlt werden.

Durch die Integration des elektrischen Wastegate-Stellers 12 in das Turbinengehäuse 8 wird die bei bekannten Abgasturboladern vorhandene lange Toleranzkette erheblich verkürzt. Dadurch entfällt die Notwendigkeit, geeignete Ausgleichsvorrichtungen im Koppelelement vorsehen zu müssen bzw. einen geeigneten Montageprozess des Koppelelementes zum Ausgleich von aufsummierten Toleranzen vornehmen zu müssen. Dies reduziert den beim Zusammenbau des Abgasturboladers notwendigen Aufwand und damit auch dessen Kosten.

Die Figur 2 zeigt eine Skizze des Turbinengehäuses 8 als Baugruppe des in der Figur 1 gezeigten Abgasturboladers. Aus dieser Figur 2 ist insbesondere ersichtlich, dass das Wastegate 11 eine Wastegate-Spindel 13 aufweist, an welcher die Wastegate-Klappe 36 befestigt ist. Diese Wastegate-Spindel 13 ist in einer Wastegate-Buchse 14 drehbar gelagert. Der elektrische Wastegate-Steller 12 ist in das wassergekühlte Turbinengehäuse 8 integriert und weist einen Deckel 15 auf, in welchen ein Stecker 16 eingeformt ist. Der Deckel 15 ist an einer Aufnahme für die Getriebestufen und/oder einem Motorschacht 17 befestigt, wobei der Motorschacht zur Aufnahme eines Elektromotors vorgesehen ist.

Des Weiteren sind in der Figur 2 der Wassereintritt 9, der Wasseraustritt 10, der Abgaseintritt 3 und der Abgasaustritt 4 dargestellt.

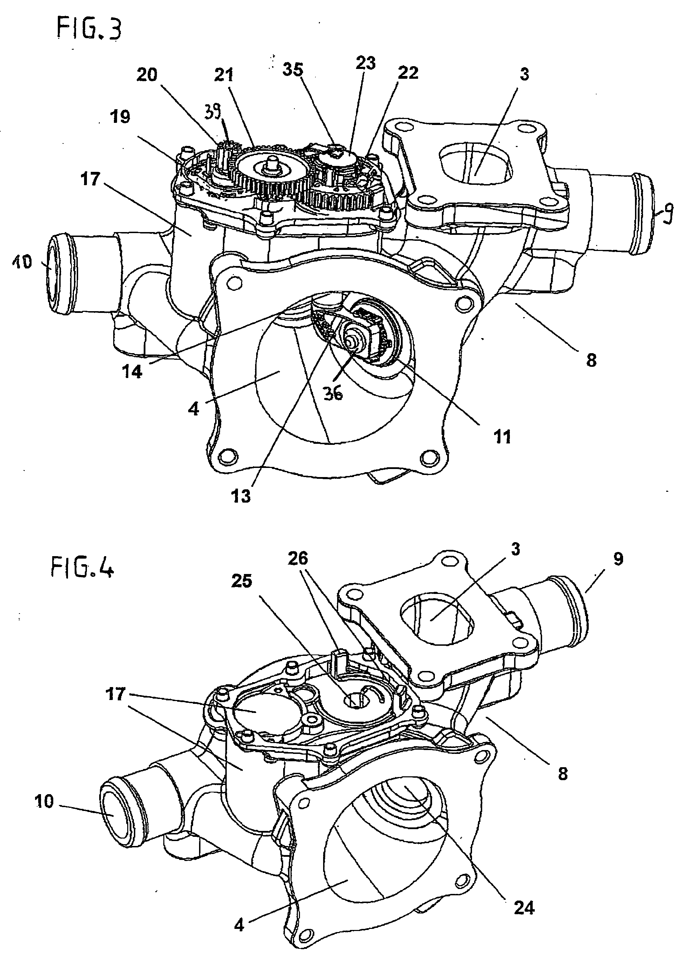

Die Figur 3 zeigt eine Skizze des Turbinengehäuses 8 als Baugruppe des in der Figur 1 gezeigten Abgasturboladers, bei der jedoch im Unterschied zur Figur 2 der Deckel 15 entfernt ist.

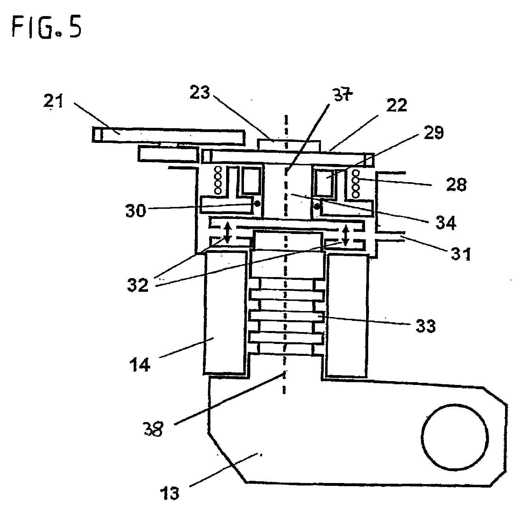

Aus der Figur 3 ist ersichtlich, dass der elektrische Wastegate-Steller 12 einen Elektromotor 19 aufweist, der eine mit einem Abtriebszahnrad 20 versehene Abtriebswelle 39 enthält, welches auf einer Abtriebswelle 39 des Elektromotors 19 angebracht ist. Dieser Elektromotor 19 ist in den Motorschacht 17 eingesteckt, welcher für ihn eine im wassergekühlten Turbinengehäuse vorgesehene Aufnahme bildet. Das vom Abtriebszahnrad 20 bereitgestellte Drehmoment wird an ein Zwischenzahnrad 21 übertragen. Dieses wiederum gibt die Drehbewegung weiter an ein Abtriebszahnrad 22, welches auf der Abtriebswelle 34 (siehe Figur 5) des elektrischen Wastegate-Stellers 12 angeordnet ist. An diesem Abtriebszahnrad 22 ist ein Magnet 23 befestigt, mit dessen Hilfe ein Sensor 35 die Winkelstellung der Abtriebswelle 34 ermitteln kann.

In dem in der Figur 3 gezeigten Ausführungsbeispiel ist ein Getriebe mit zwei Getriebestufen veranschaulicht. Gemäß weiterer, nicht in den Figuren dargestellter Ausführungsbeispiele kann ein in ein wassergekühltes Turbinengehäuse integrierter elektrischer Wastegate-Steller auch eine andere Anzahl von Getriebestufen aufweisen, beispielsweise eine Getriebestufe, drei Getriebestufen, vier Getriebestufen oder noch mehr Getriebestufen.

Die Figur 4 zeigt eine Skizze eines bearbeiteten Fertigteils des Turbinengehäuses 8 mit einer Aufnahme für einen integrierten elektrischen Wastegate-Steller. Aus dieser Darstellung ist der Wastegate-Kanal 24 ersichtlich, durch welchen die heißen Abgase der Brennkraftmaschine am Turbinenrad vorbeigeleitet werden. Des Weiteren ist in der Figur 4 der Motorschacht 17 dargestellt, der zur Aufnahme des Elektromotors des elektrischen Wastegate-Stellers vorgesehen ist. Ferner ist in der Figur 4 ein Schacht bzw. Kanal 25 gezeigt, der zur Aufnahme der Abtriebswelle 34 des elektrischen Wastegate-Stellers 12 vorgesehen ist. Darüber hinaus sind in der Figur 4 die Endanschläge 26 gezeigt, die zur Begrenzung des Drehwinkels des Abtriebszahnrades 22 des Wastegate-Stellers dienen.

Die Figur 5 zeigt eine Schnittdarstellung, in welcher die Lagerung der in der Figur 3 gezeigten Wastegate-Spindel 13 in der Wastegate-Buchse 14 detaillierter veranschaulicht ist. Um ein günstiges Packaging und eine geringe Systemkomplexität zu erreichen und gewünschte Kühleffekte zu ermöglichen, liegen die Abtriebswelle 34 des elektrischen Wastegate-Stellers 12 und die Welle der Wastegate-Spindel 13 auf einer gemeinsamen Achse, d. h. ihre Mittellinien 37 und 38 verlaufen in einer Flucht. Bei einer derartigen Anordnung des elektrischen Wastegate-Stellers steht der in der Figur 5 untere Endbereich der Wastegate-Spindel 13 im Betrieb im sehr heißen Abgasstrom des Kraftfahrzeugs. Im oberen Endbereich der in der Figur 5 gezeigten Anordnung befindet sich der Magnet 23, der zusammen mit dem in der Figur 3 gezeigten Sensor 35 zur Winkelpositionserfassung der Abtriebswelle 34 des elektrischen Wastegate-Stellers 12 dient. Des Weiteren sind in der Figur 5 das Zwischenzahnrad 21 und das mit der Abtriebswelle 34 verbundene Zahnrad 22 gezeigt.

Um sicherzustellen, dass im Betrieb weder der Magnet 23 noch der Sensor 35 noch der Elektromotor 19 des elektrischen Wastegate-Stellers 12 zu hohen Temperaturen ausgesetzt sind, weist die Wastegate-Spindel 13 Kühlrippen 33 auf. Des Weiteren ist die Abtriebswelle 34 des elektrischen Wastegate-Stellers 12 thermisch von der Wastegate-Spindel 13 entkoppelt. Dadurch wird in vorteilhafter Weise der Wärmefluss von der Wastegate-Spindel 13 zum elektrischen Wastegate-Steller 12 klein gehalten. Diese thermische Entkopplung wird beim gezeigten Ausführungsbeispiel dadurch realisiert, dass die Wastegate-Spindel 13 und die Abtriebswelle 34 des elektrischen Wastegate-Stellers 12 zwei unterschiedliche Bauteile sind, die lediglich durch eine formschlüssige Verbindung 32 miteinander gekoppelt sind. Die Abtriebswelle 34 ist durch eine Lagerung 29 drehbar gelagert. Bei dieser Lagerung handelt es sich um ein Kugellager, ein Nadellager, ein Wälzlager, etc.. Zum genannten Kühlungseffekt trägt des Weiteren die bereits oben genannten thermische Kopplung des Wastegates und eines oder mehrerer Bauteile des Wastegate-Stellers an einen oder mehrere Kühlkanäle des Turbinengehäuses bei.

Um zu verhindern, dass in unerwünschter Weise Abgase in das Innere des elektrischen Wastegate-Stellers eindringen können, ist eine Dichtung 30 vorgesehen.

Ferner weist die in der Figur 5 gezeigte Vorrichtung eine Entlüftung 31 auf. Diese hat den Vorteil, dass evtl. auftretende geringe Mengen an Abgas nach außen entweichen können und nicht an der Dichtung 30 vorbei in das Innere des elektrischen Wastegate-Stellers gedrückt werden können. Um die Abtriebswelle 34 herum ist eine Drehfeder 28 vorgesehen, so dass eine Vorzugsbewegungsrichtung unterstützt wird.

## Patentansprüche

1. Abgasturbolader, der ein Turbinengehäuse (8) aufweist und mit einem im Turbinengehäuse angeordneten, eine Wastegate-Klappe (36) aufweisenden Wastegate (11) ausgestattet ist, wobei die Wastegate-Klappe (36) an einer eine Mittelachse (39) aufweisenden Wastegate-Spindel (13) befestigt ist und mittels eines Wastegate-Stellers (12) verstellbar ist, wobei der Wastegate-Steller (12) ein elektrischer Wastegate-Steller ist, **dadurch gekennzeichnet, dass**
der Wastegate-Steller (12) eine Abtriebswelle (34) mit einer Mittelachse (37) aufweist und integrierter Bestandteil des Turbinengehäuses (8) ist,
das Turbinengehäuse (8) wassergekühlt ist und Kühlkanäle aufweist, wobei ein oder mehrere Bestandteile des Wastegate-Stellers (12) mit einem oder mehreren der Kühlkanäle thermisch gekoppelt sind und
die Abtriebswelle (34) des elektrischen Wastegate-Stellers (12) bei der Verstellung der Wastegate-Klappe (36) mit der Wastegate-Spindel (13) zusammenwirkt, wobei die Abtriebswelle des elektrischen Wastegate-Stellers (12) und die Wastegate-Spindel (13) in einer Flucht liegen, durch eine formschlüssige Verbindung (32) miteinander gekoppelt sind und thermisch voneinander entkoppelt sind.

2. Abgasturbolader nach Anspruch 1, **dadurch gekennzeichnet, dass** der elektrische Wastegate-Steller (12) einen Elektromotor (19) aufweist, der Elektromotor eine mit einem Abtriebszahnrad (20) versehene Abtriebswelle (39) aufweist und das Abtriebszahnrad (20) der Abtriebswelle (39) des Elektromotors (19) über ein Zwischenzahnrad (21) mit dem Abtriebszahnrad (22) der Abtriebswelle (34) des Wastegate-Stellers (12) zusammenwirkt.

3. Abgasturbolader nach einem der vorhergehenden Ansprüche, **dadurch gekennzeichnet, dass** die Wastegate-Spindel (13) Kühlrippen (33) aufweist.

## Claims

1. Exhaust-gas turbocharger which has a turbine housing (8) and which is equipped with a wastegate (11) which is arranged in the turbine housing and which has a wastegate flap (36), wherein the wastegate flap (36) is fastened to a wastegate spindle (13) which has a central axis (39), and said wastegate flap can be adjusted by way of a wastegate actuator (12), wherein the wastegate actuator (12) is an electric wastegate actuator,
**characterized in that**
the wastegate actuator (12) has a drive output shaft (34) with a central axis (37) and is an integral constituent part of the turbine housing (8),
the turbine housing (8) is water-cooled and has cooling ducts, wherein one or more constituent parts of the wastegate actuator (12) are thermally coupled to one or more of the cooling ducts, and
the drive output shaft (34) of the electric wastegate actuator (12) interacts, during the adjustment of the wastegate flap (36), with the wastegate spindle (13), wherein the drive output shaft of the electric wastegate actuator (12) and the wastegate spindle (13) are in alignment, are coupled to one another by way of a positively locking connection (32), and are thermally decoupled from one another.

2. Exhaust-gas turbocharger according to Claim 1, **characterized in that** the electric wastegate actuator (12) has an electric motor (19), the electric motor has a drive output shaft (39) which is provided with a drive output gearwheel (20), and the drive output gearwheel (20) of the drive output shaft (39) of the electric motor (19) interacts via an intermediate gearwheel (21) with the drive output gearwheel (22) of the drive output shaft (34) of the wastegate actuator (12).

3. Exhaust-gas turbocharger according to one of the preceding claims, **characterized in that** the wastegate spindle (13) has cooling fins (33).

## Revendications

1. Turbocompresseur à gaz d'échappement, qui présente un carter de turbine (8) et qui est muni d'un limiteur de pression de suralimentation (11) disposé dans le carter de turbine et présentant un clapet limiteur de pression de suralimentation (36), le clapet limiteur de pression de suralimentation (36) étant fixé au niveau d'une broche de limiteur de pression de suralimentation (13) présentant un axe médian (39) et pouvant être réglée au moyen d'un régulateur de limiteur de pression de suralimentation (12), le régulateur de limiteur de pression de suralimentation (12) étant un régulateur de limiteur de pression de suralimentation électrique, **caractérisé en ce que**
le régulateur de limiteur de pression de suralimentation (12) présente un arbre de sortie (34) avec un axe médian (37) et fait partie intégrante du carter de turbine (8), le carter de turbine (8) étant refroidi à l'eau et présentant des canaux de refroidissement, un ou plusieurs constituants du régulateur de limiteur de pression de suralimentation (12) étant accouplé(s) thermiquement à un ou plusieurs des canaux de refroidissement et
l'arbre de sortie (34) du régulateur de limiteur de pression de suralimentation électrique (12), lors du réglage du clapet limiteur de pression de suralimentation (36), coopérant avec la broche de limiteur de pression de suralimentation (13), l'arbre de sortie du régulateur de limiteur de pression de suralimentation électrique (12) et la broche de limiteur de pression de suralimentation (13) étant en alignement, étant accouplés l'un à l'autre par une connexion par engagement par correspondance de formes (32) et étant désaccouplés thermiquement l'un de l'autre.

2. Turbocompresseur à gaz d'échappement selon la revendication 1, **caractérisé en ce que** le régulateur de limiteur de pression de suralimentation électrique (12) présente un moteur électrique (19), le moteur électrique présente un arbre de sortie (39) pourvu d'une roue dentée de sortie (20) et la roue dentée de sortie (20) de l'arbre de sortie (39) du moteur électrique (19) coopère par le biais d'une roue dentée intermédiaire (21) avec la roue dentée de sortie (22) de l'arbre de sortie (34) du régulateur de limiteur de pression de suralimentation (12).

3. Turbocompresseur à gaz d'échappement selon l'une quelconque des revendications précédentes, **caractérisé en ce que** la broche de limiteur de pression de suralimentation (13) présente des ailettes de refroidissement (33).
